# EUROPEAN PATENT SPECIFICATION

(11) **EP 2 868 636 B1**
(45) Date of publication and mention of the grant of the patent: **03.08.2016**
(21) Application number: 13190759.4
(22) Date of filing: 29.10.2013
(51) Int. Cl.: C04B 7/44, F27B 7/00

(54) **Method for providing low grade fuel to a calciner of a cement clinker line**
Verfahren zur Bereitstellung von minderwertigem Brennstoff in einem Kalzinator einer Zementklinkerlinie
Procédé permettant de fournir du combustible de qualité inférieure à un four de calcination d'une ligne de clinker de ciment

(43) Date of publication of application: 06.05.2015
(73) Proprietor: Alite GmbH, 31535 Neustadt (DE)
(72) Inventor: Mathai, Robert, 31535 Neustadt (DE); Köhler, Reinhard, 31535 Neustadt (DE)
(74) Representative: Jöstingmeier, Martin

(56) References cited:
- EP-A2- 0 148 723
- WO-A1-01/09548
- WO-A1-2008/138903
- US-A1- 2003 143 508

## Description

### Field of the invention

The invention relates to the production of cement clinker and in particular to providing additional energy to a calciner of a cement clinker line.

### Description of the related art

The cement clinker process requires energy for calcining and sintering the raw meal. In the past, high grade fuels, like natural gas, liquid gas and as well coal were used as energy source. As these energy sources become more and more expensive one attempts to use so called low grade fuels as energy source. Burning low grade fuels, like used paper, carton, packaging waste, plastics and the like in the cement clinker line is possible but requires expensive preprocessing of the low grade fuel, to obtain pieces of combustible matter having at least approximately the same size, weight and burning period.

WO 2008/138903 discloses a reactor for burning combustibles of different sizes and weight. The reactor is part of a cement clinker line. The reactor has a combustion air inlet, being connected to a tertiary air duct. The tertiary air flow is used as combustion air in the reaction and the fumes exit the reactor via a connection to the calciner. In the reactor is a grate of pivotable grate bars, extending perpendicular to the air flow in the reactor. The grate bars are arranged like steps of a stair. Between the grate bars are spaces to enable the tertiary air flow through the reactor. A mixture of combustible matter and raw meal is loaded on the top grate bar. The combustible matter ignites in the tertiary air flow and the respective heat is transferred to the raw meal which is thereby calcined. Combustion of the low grade fuel and at least pre-calcining of the raw meal takes place in the reactor. The precalcined raw meal is transported with the flue gases of the combustion to the calciner. Remaining fuel and residues are transported by pivoting the grate bars to a chute, connecting the reactor with the kiln's raw meal intake.

WO 01/09548 A1 discloses a cement clinker line with a kiln and a clinker cooler. Hot air from the clinker cooler is provided via a tertiary air duct to a calciner. Before the tertiary air flow reaches the calciner it passes a separate compartment for incineration of combustible waste. Waste is introduced via a waste inlet onto a supporting surface being a rotating disc. On the disc the waste is ignited and incinerated, while at the same time transported to an outlet of the compartment. A scraper mechanism pushes all material on the disc into the calciner where sorting takes place. The small particles drift with the air flow in the calciner and large particles drop through to the kiln.

US 2003/143508 A1 suggests to insert a rotary-drum reactor in the tertiary air duct for firing a mixture of fuel and raw meal in the rotary-drum reactor to thereby obtain calcination of the raw meal. At the exit of the rotary-drum type reactor the solid material is a mixture of coarser components and fine-grained components. The fine ones are introduced into the ascending branch of the calciner and the coarser components are introduced into the inlet of the kiln.

### Summary of the invention

The invention is based on the observation that bulky, only partially burnt combustible matter can be provided to a cement clinker kiln only to some limited extend without negatively affecting the kiln process. Further, burning the fuel in the reactor necessitates cooling of the reactor by raw meal, i.e. corresponding raw meal conveyors for feeding the reactor with raw meal have to be installed.

Based on these observations it is an object of the invention to provide a method and an apparatus for providing heat to a calciner of a cement clinker line by combusting low grade fuels like packaging waste and the like in the calciner. This packaging waste is typically separated by consumers and disposed in particular waste containers. This packaging waste consists to very high degree of light weight packaging material, mostly plastic packaging foils and small boxes of plastic. This light weight fraction is perfectly suited for being combusted in a calciner. However the packaging waste comprises as well a small amount of heavier pieces, like old shoes, wood, metal pieces and the like. These heavier pieces are not suited to be combusted in a calciner.

Solutions to the problem are described in the independent claims. The dependent claims relate to further improvements of the invention.

The low grade fuels like e.g. packaging waste can be considered as bulk material consisting of pieces of different materials and sizes and forms.

According to the method, a tertiary air stream is provided from a clinker cooler to a calciner of a cement clinker line for calcining raw meal. At least a part of said tertiary air flow is provided to a fuel classifier with a classification zone. The pieces of the low grade fuel are provided to the classification zone as well. Pieces of fuel having a low weight/surface ratio are so to speak 'dispersed' or 'suspended' in the tertiary air stream and thus transported by the tertiary air stream to the calciner, where they are combusted. Accordingly, the combustion heat is transferred directly to the raw meal in the calciner.

However, pieces of fuel having a bigger weight/surface ratio than the pieces of the low weight fraction cannot be suspended in the tertiary air stream and literally drop through the tertiary air stream. These pieces are referred to as high weight fraction. The pieces of the high weight fraction are collected in the classification zone, e.g. on a collector.

The high weight fraction's pieces of the fuel thus have a weight/surface ratio obviating suspension and thus transportation by the tertiary air flow through the calciner. In addition one may expect that the dwell time in the calciner, which is typically only a couple of seconds (typically about 2s to 10s) would be too short for ensuring that the pieces of the high weight fraction are burnt in the calciner. The pieces of the low weight fraction, however, can be transported by the tertiary air stream as they would otherwise be collected in the classification zone and it may thus be expected that the pieces of the low weight fraction are reliably transported through the calciner. In addition one may expect that the pieces of the low weight fraction are at least almost completely burnt when reaching the end of the calciner, as the burning period of bulk material depends on its weight/surface ratio, like the dispersibility of the pieces. In other words if the dispersibility of a piece of a given fuel material raises, its burning period is in turn reduced. This effect is used for classifying the fuel. Pieces with a short burning period are fed to the calciner, i.e. the low weight fraction, and pieces with a burning period which is longer than the time of flight (if any) through the calciner is collected in the classification zone.

The high weight fraction so to speak 'drops through' the tertiary air stream and is collected in the classification zone, e.g. on support structures that may have a wing like form. There, the high weight fraction is subjected to the tertiary air stream and is thus subjected to pyrolysis and/or burnt and dust blasted. In turn the temperature of the tertiary air stream is thus raised. However, as only a small part of the fuel is burnt in the classifier, no additional cooling, e.g. by adding raw meal is required. A piece of the high weight fraction being collected is treated in the classification zone by the tertiary air stream until its residues are small enough to be dispersed in the tertiary air stream and thus transported by the tertiary air stream to the calciner. Alternatively the residues may be provided directly to the kiln's raw meal inlet, as they are small when leaving the classifier. By burning and/pyrolysing fuel of the high weight fraction, the internal energy of the tertiary air stream is enhanced. This additional energy is used in the calciner for heating and at least pre-calcining raw meal.

The method thus provides an efficient possibility of providing thermal energy to a calciner of a cement clinker line, by providing a low weight fraction of (low grade) fuel directly to the calciner. Pieces of fuel being too big and/or too heavy for passing the calciner cannot be dispersed in the tertiary air stream in the classifier.

The above mentioned weight/surface ratio for classifying the dispersibility is only a first intuitive assessment, of course the shape and the orientation of the fuel pieces has to be considered as well. Relevant for classification is the dispersibility of the pieces of the fuel.

Preferably, the flow velocity of the tertiary air stream passing the classification zone is adjusted to control the burning period of the pieces of fuel provided to the calciner, thereby forming the low weight fraction. The critical weight/surface ratio, i.e. the weight/surface ratio above which pieces are classified to belong to the high weight fraction and below which pieces belong to the low weight fraction, depends as well on the flow velocity of the tertiary air in the classification zone.

For example, a damper may be installed between the clinker cooler and the tertiary air stream inlet of the classifier for varying the flow velocity in the classification zone and to thereby adjust the weight/surface ratio of the pieces being dispersed in the tertiary air flow. If the velocity is reduced, the portion of fuel being collected in the classification zone and thus belonging to the high weight fraction is augmented and the portion of fuel being transported to the calciner and thus belonging to the low weight fraction is reduced.

Preferably, the gas pressure inside the housing is controlled to be slightly below ambient pressure. When inserting the fuel into the classification zone and thus the housing, fresh air intake in the housing should be avoided. Thus, the fuel is preferably inserted via lock, e.g. a rotary gate valve, to seal the housing against the atmosphere.

An apparatus for producing cement clinker and being suited for making use of the above method comprises a kiln and a clinker cooler wherein a tertiary air duct connects the clinker cooler with a calciner to thereby provide a tertiary air stream as heat source for calcining raw meal in the calciner. The raw meal is subsequently processed in the kiln to clinker and unloaded to the clinker cooler.

In addition the apparatus comprises a low grade fuel classifier. The low grade fuel classifier has a housing with at least one classification zone inside the housing. The classification zone is connected to the tertiary air duct for providing at least a part of the tertiary air stream from the clinker cooler to the classification zone. Beyond, the low grade fuel classifier comprises a connection to the calciner for providing said part of a tertiary air stream to the calciner. Thus, there is a tertiary air stream or tertiary air flow passing the classification zone. A fuel inlet is provided for subjecting fuel, like pieces of low grade fuel, e.g. packaging waste, to the tertiary air stream passing the classification zone. Thereby, a low weight fraction of the fuel is suspended in the tertiary air stream and provided to the calciner. The classifier further comprises a collector for collecting a high weight fraction of the fuel which is not being transported by the tertiary air stream to the calcincer, i.e. not suspended. The collector is positioned in the tertiary air stream and configured to subject collected pieces of the high weight fraction to the tertiary air stream for pyrolysing and/or combusting and/or dust blasting the high weight fraction's pieces.

Preferably, a damper is installed upstream of the classifier, e.g. in the tertiary air duct, i. e. between the clinker cooler and the classification zone. The damper enables to control the critical weight/surface ratio by controlling the tertiary air flow of that part of the tertiary air flow being provided to and thus passing the classification zone and in particular the flow velocity of that part of the tertiary air flow.

Preferably, the apparatus comprises a tertiary air bypass connecting the tertiary air duct and/or the clinker cooler with the calciner. This bypass enables to change the flow velocity of the tertiary air passing the classification zone without changing the total tertiary air flow and vice versa. Preferably, the bypass comprises a damper for controlling the tertiary air stream through the bypass.

For example, the collector may comprise at least one support structure having e.g. a wing like form and being subsequently referred to as "wing". The wing is positioned in the classification zone below the fuel inlet for collecting fuel dropping through the tertiary air stream on the wing's up facing side. Preferably, a number of wings, e.g. two, three or more are installed in the classification zone. Preferably, the wings are installed at least approximately parallel to each other (parallel within ±20°, preferably ±10°, more preferred ±5° or even ±1°). Preferably the wings are spaced from each other, thereby providing at least one passage between at least two neighbored wings for the tertiary air passing the classification zone. For example, the wings may be positioned one above the other with passages for the tertiary air in between (with or without horizontal displacement).

The at least one wing may preferably span the classification zone, in particular at least approximately orthogonal to the flow of the tertiary air. The wing has a front edge, facing the tertiary air flow and thus the connection to the tertiary air duct.

The pitch of the at least one wing, or in other words its angle of attack is preferably fixed during classification. If the optimum pitch is known, there is no further need for adjusting the collector. A change of the wing's pitch during classification to thereby transport pieces of fuel is not required. In this sense the wing's pitch may be regarded as fixed.

Preferably, the at least one wing has at least one fluid conduit with a nozzle like opening on its up facing surface. Alternatively or additionally there may be at least one nozzle at the wing's down facing side, being directed towards another wing's up facing side. The at least one nozzle enables to remove sticky fuel or residues from the collector without stopping the whole process by emitting a fluid pulse, e.g. an air pulse as well referred to as compression wave towards the respective wing

The fuel classifier may preferably comprise at least one nozzle for directing a compression wave towards the collector. The at least one nozzle may be mounted to the housing and/or a support structure supporting e.g. the collector.

### Description of Drawings

In the following the invention will be described by way of example, without limitation of the general inventive concept, on examples of embodiment with reference to the drawings.
Figure 1 shows a classifier positioned in an example cement clinker line.
Figure 2 shows a classifier.

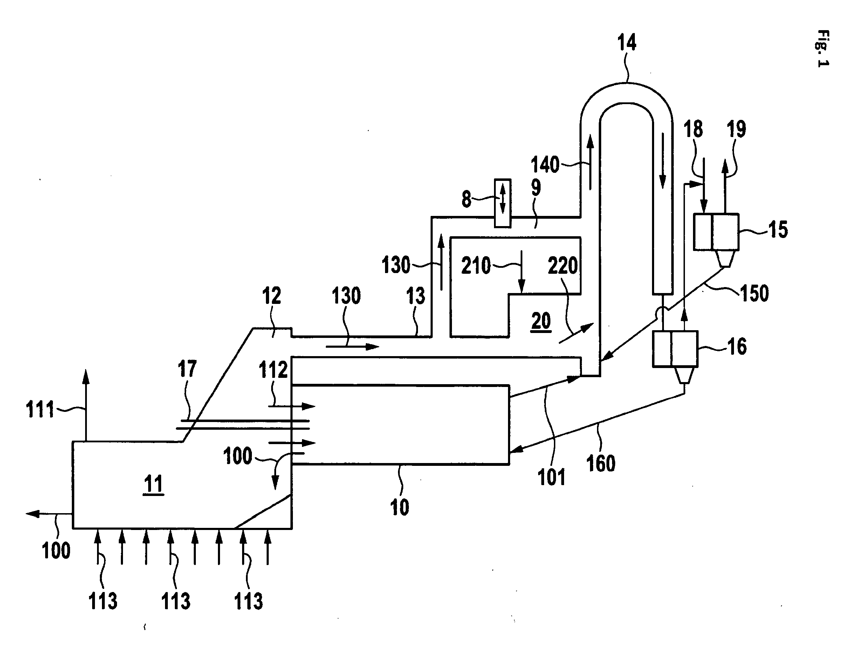

In figure 1, the main components of a typical cement clinker line are shown to which a classifier 20 has been added. The cement clinker line comprises at least a kiln 10 for processing at least pre-calcined raw meal 160 to clinker by sintering and eventually further calcining. The clinker 100 is conveyed to a clinker cooler 11 for cooling the clinker and recuperating at least a part of the thermal energy. A cooling gas 113 contacts the clinker, to transfer thermal energy to the cooling gas 113 and in turn cool the clinker 100 down. The heated cooling gas is provided to the kiln 10 as combustion gas 112 and to a calciner 14 as tertiary air 130 via a tertiary air duct 13 . A classifier 20, being explained below, is positioned between the calciner 14 and the clinker cooler 11. The classifier 20 sorts pieces of fuel by the respective piece's estimated burning period and provides pieces of fuel with a burning period shorter than their respective dwell time in the calciner 14 to the calciner 14. A tertiary air bypass 9 connects the tertiary air duct 13 directly with the calciner 14, thereby bypassing the classifier 20. The tertiary air 130 flow in the bypass may be controlled by a damper 8.

In the calciner 14, raw meal 150 is at least pre-calcined using thermal energy provided by kiln exhaust gas 101 and the tertiary air stream 130. In addition energy is provided by burning fuel 210 in the calciner. The fuel 210 is provided to the classifier and in part provided from the classifier 20 to the calciner 14 as indicated by arrow 220. As usual, the raw meal 150 is provided from a heat exchanger being symbolized by a cyclone, to the calciner 14.

The pre-calcined raw meal 160 is separated by air/raw meal separation means 16, e.g. at least one cyclone, from the tertiary air/flue gas mixture transporting it through the calciner 14. The separated tertiary air/flue gas mixture is provided to at least one heat exchanger 15 for preheating fresh raw meal from a raw meal source 18. The raw meal 150 is as usually preheated in a heat exchanger 15 by use of the exhaust gas provided from the calciner 14. Tertiary air/flue gas mixture, briefly referred to as exhaust gas is usually subjected to further processing, e.g. dedusting, further heat recuperation and flue gas treatment, like e.g. denitrification.

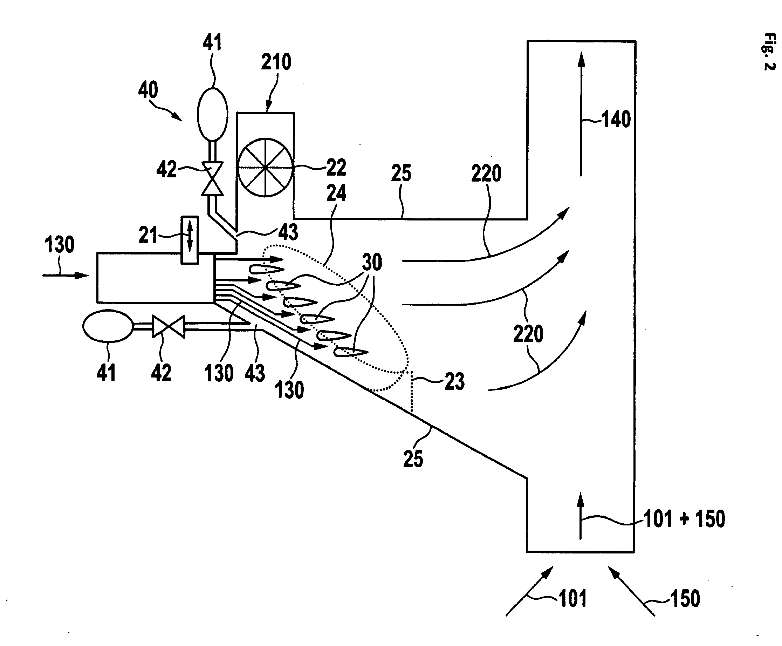

An example classifier 20 is shown in figure 2. The calciner comprises a housing 25 with a lock for inserting fuel 210, but to avoid intake of ambient air. The lock 22 is symbolized as rotary gate valve 22, the latter being only an example for any suited lock. Inside the housing is a classification zone 24 for classifying the fuel by its dispersibilty in the tertiary air stream 130 passing the classification zone 24.

The classifier 20 has a connection to the tertiary air duct 13 as intake for tertiary air 130. Between the tertiary air duct 13 and the classifier 20 is a damper 21 for controlling the flow velocity of the tertiary air 130 in the classifier 20. Different from the figures, there exists preferably a bypass to the classifier 20, for bypassing at least a part of the tertiary air stream 130. In the bypass there is preferably at least one bypass damper, to enable control of the tertiary air stream in the bypass.

From the tertiary air intake the tertiary air stream 130 Is guided towards the classification zone 24. In the classification zone 24 is a collector 30, which is represented by wings 30. The wings extend at least substantially orthogonal to the tertiary air stream 130. The tertiary air stream 130 in the classification zone is symbolized by arrows 130. Between the wings 30 are passages for the tertiary air stream. Thus, the tertiary air stream 130, which has typically about 850°C to 1000C, heats the wings 30 and thus the collector.

In this example, the wings 30 are spaced vertically from each other to thereby form passages for the tertiary air stream 130. The wings 30 may have as well a horizontal offset to each other, as depicted. The horizontal offset has to be adjusted to safely collect pieces of fuel not being suspended in the tertiary air stream as explained below in more detail.

Pieces of fuel 210 being inserted into the classifier's housing 25 via the lock 22 fall downwards until they enter the classification zone 24. Pieces of fuel 210 having a low weight and big surface (relative to the weight), or in other words a low weight/surface ratio are suspended by the tertiary air stream 130 and transported towards the calciner 14. The fuel/tertiary air suspension is indicated by arrows 220. That part of the fuel that can be suspended can be referred to as low weight fraction of the fuel 210 and is combusted in the calciner.

Pieces of fuel being too heavy for being suspended drop onto the collector, i.e. on the up facing surfaces of the wings 30. This part of fuel being collected can be referred to as high weight fraction. The pieces of the high weight fraction are subjected to the tertiary air flow 130, i.e. hot and dust loaded air. The dust is abrasive and reduces the size of the pieces of the high weight fraction by dust blasting. The fuel dust obtained due to the abrasion is suspended by the tertiary airflow and transported to the calciner for combustion. In addition, the pieces of fuel of the high weight fraction are subjected to the heat of the tertiary air stream and the collector. This yields pyrolysis and/or combustion of the respective pieces of fuel 210. Thereby, the size of the respective pieces is further reduced, until they are suspended In the tertiary air stream 130 passing the classification zone 24 and are thus provided to the calciner 14.

Extremely heavy or heat and dust resistant pieces comprised in the fuel, e.g. metal parts like screws or pins, can be collected by an optional drop stop 23, which may be cleaned during revision. Alternatively these non combustible pieces may be removed by a pusher, chain conveyor or the like. As the amount of these non combustibles in the fuel is rather low and as almost any matter is subjected to erosion due to dust blasting, the pieces may as well be routed to the kiln, as small amounts of these pieces can be tolerated.

In case pieces of fuel agglomerate on the collector, they can be removed at least from the respective wing by a compression wave being emitted from a nozzle like 43. The nozzles 43 are each connected to a reservoir of compressed air 41. In the figure, each nozzle 43 is connected to a single reservoir, but as well a single reservoir 43 may be connected via air ducts to multiple nozzles. At least one valve 42 is arranged in the air duct which can be opened for providing the compressed air to at least one of the nozzles 43, to thereby emit a compression wave resolving the agglomeration.

### List of reference numerals

- 8: damper
- 9: bypass
- 10: kiln
- 11: clinker cooler, briefly 'cooler'
- 12: kiln hood
- 13: tertiary air duct
- 14: calciner
- 15: heat exchanger
- 16: air/raw meal separation means
- 17: burner
- 18: raw meal source
- 19: flue gas treatment
- 20: classifier
- 21: damper
- 22: lock/rotary gate valve as fuel inlet of the classifier
- 23: drop stop
- 24: classification zone
- 25: housing
- 30: support structure e.g. wing
- 40: air blast cleaning unit
- 41: reservoir for pressurized air
- 42: control valve
- 43: nozzle
- 100: clinker
- 101: kiln exhaust gas/flue gas
- 111: cooler exhaust gas
- 112: combustion gas
- 113: cooling gas
- 130: tertiary air
- 140: mixture of tertiary air, raw meal, fuel and flue gas
- 150: raw meal
- 160: (pre-) calcined raw meal
- 210: fuel
- 220: tertiary air and fuel mixture

## Claims

1. Method for calcination of raw meal (150) in a calciner (14) of a cement clinker line, comprising at least the steps of:
- providing at least a part of a tertiary air stream (130) from a clinker cooler (11) to the calciner (14) via a classification zone (24) of a classifier (20),
- providing fuel (210) to the classification zone (24), whereby a low weight fraction of the fuel is transported by the tertiary air stream (130) from the classification zone (24) into the calciner (14) and whereby a high weight fraction passes the tertiary air stream (130) and is collected in the classification zone (24),
- combusting the low weight fraction in the calciner (14), and
- reducing the mass of pieces of the high weight fraction in the classification zone (24) by dust blasting and/or combustion and/or pyrolysis until the pieces and/or parts thereof are transported into the calciner (14) by the tertiary air stream (130).

2. The method of claim 1
**characterized in that**,
controlling the velocity of said part of the tertiary air stream (130) passing via said classification zone (24).

3. The method of claim 2,
**characterized in that**,
the velocity of said part of the tertiary air stream (130) is controlled by actuation of a damper (21) upstream of the classification zone (24).

4. Apparatus for producing cement clinker, comprising at least a kiln (10), a calciner (14), a clinker cooler (11) and a tertiary air duct (13), wherein the tertiary air duct (13) connects the clinker cooler (11) with the calciner (14) to thereby provide heated air for calcining raw meal (150) provided to the calciner (14), which is subsequently processed in the kiln (10) to clinker (100) and unloaded to the clinker cooler (11)
**characterized in, that**
the apparatus comprises a low grade fuel classifier (20) with:
(i) a classification zone (24) having a connection to the tertiary air duct (13) for providing at least a part of a tertiary air stream (130) from the clinker cooler (11) to the classification zone (24) and having a connection to the calciner (14), for providing said part of a tertiary air stream (130) to the calciner (14),
(ii) a fuel inlet (22) for subjecting fuel (210) to the tertiary air stream (130) passing the classification zone (24),
(iii) at least one collector (30) for collecting pieces of a high weight fraction of the fuel (210) which are not being transported by the tertiary air stream (130) to the calciner (14), wherein the at least one collector (30) is positioned in the classification zone (24), to subject said pieces of the high weight fraction to the tertiary air stream (130) for pyrolysing and/or combusting and/or dust blasting said pieces.

5. Apparatus of claim 4
**characterized in that**,
at least one damper (21) is installed upstream of the classification zone (24), for controlling the tertiary air stream (130) passing the classification zone (24).

6. Apparatus of one of claims 4 or 5
**characterized in that**,
the collector (30) comprises at least one wing (30), being positioned in the classification zone (24) below the fuel inlet (22) for collecting fuel dropping through the tertiary air stream (130) on the wing's up facing side.

7. Apparatus of the previous claim,
**characterized in that**,
the at least one wing (30) spans the classification zone (24) and has a front edge which faces the connection to the tertiary air duct (130).

8. Apparatus of one of claims 6 or 7
**characterized in that**,
the pitch of the at least one wing (30) is fixed.

9. Apparatus of one of claims 6 to 8
**characterized in that**,
the at least one wing (30) has at least one conduit with a nozzle like opening on its up facing surface.

10. Apparatus of one of claims 4 to 9,
**characterized in that**,
the classifier (20) comprises at least one nozzle (43) for directing a compression wave towards the classification zone (24) and in particular to the collector (30).

11. Apparatus of claim 10,
**characterized in that**,
the at least one nozzle (43) is connected via at least one air conduit to at least one compressed gas source (41).

## Patentansprüche

1. Verfahren zur Kalzination von Rohmehl (150) in einem Kalzinator (14) einer Zementklinkerlinie, welches zumindest die Schritte aufweist:
- Zuführen wenigstens eines Teils eines Tertiärluftstroms (130) von einem Klinkerkühler (11) zum Kalzinator (14) durch eine Sichtungszone (24) eines Sichters (20),
- Zuführen von Brennstoff (210) in die Sichtungszone (24), wobei ein leichter Anteil des Brennstoffs mit dem Tertiärluftstrom (130) von der Sichtungszone (24) in den Kalzinator (14) befördert wird und wobei ein schwerer Anteil den Tertiärluftstrom (130) passiert und in der Sichtungszone (24) gesammelt wird,
- Verbrennen des leichten Anteils im Kalzinator (14), und
- Verringern der Masse von Stücken des schweren Anteils in der Sichtungszone (24) durch Staubstrahlerosion und/oder Verbrennung und/oder Pyrolyse so lange bis die Stücke und/oder Teile davon mit dem Tertiärluftstrom (130) in den Kalzinator (14) befördert werden.

2. Verfahren nach Anspruch 1
**dadurch gekennzeichnet, dass**
die Geschwindigkeit des Anteils des Tertiärluftstroms (130), der die Sichtungszone (24) durchströmt, geregelt wird.

3. Verfahren nach Anspruch 2
**dadurch gekennzeichnet, dass**
die Geschwindigkeit des Anteils des Tertiärluftstroms (130) durch Verstellen eines Regelorgans (21) geregelt wird, welches der Sichtungszone (24) in Strömungsrichtung vorgelagert ist.

4. Vorrichtung zur Herstellung von Zementklinker, zumindest bestehend aus einem Ofen (10), einem Kalzinator (14), Klinkerkühler (11) und einem Tertiärluftkanal (13), wobei der Tertiärluftkanal (13) den Klinkerkühler (11) mit dem Kalzinator (14) verbindet, um dadurch erhitzte Luft zur Kalzinierung von Rohmehl (150) zur Verfügung zu stellen, welches in den Kalzinator (14) eingebracht wird, um nachfolgend im Ofen (10) zu Klinker (100) verarbeitet und in den Klinkerkühler (11) ausgetragen zu werden
**dadurch gekennzeichnet, dass**
die Vorrichtung einen Sichter (20) für minderwertigen Brennstoff umfasst, mit:
(i) einer Sichtungszone (24) die eine Verbindung zum Tertiärluftkanal (13) zur Zuführung wenigstens eines Teils eines Tertiärluftstroms (130) vom Klinkerkühler (11) zur Sichtungszone (24) und eine Verbindung zum Kalzinator (14), zur Zuführung dieses Tertiärluftstroms (130) zum Kalzinator (14), aufweist,
(ii) einem Brennstoffeinlass (22) zum Einbringen von Brennstoff (210) in den die Sichtungszone (24) durchquerenden Tertiärluftstrom (130),
(iii) wenigstens einer Sammeleinrichtung (30) zum Sammeln von Stücken eines schweren Anteils des Brennstoffs (210) welche nicht durch den Tertiärluftstrom (130) in den Kalzinator (14) befördert werden, wobei die mindestens eine Sammeleinrichtung (30) in der Sichtungszone (24) angeordnet ist, um diese Stücke des schweren Anteils dem Tertiärluftstrom (130) auszusetzen um sie zu pyrolisieren und/oder zu verbrennen und/oder mittels Staubstrahlung zu erodieren.

5. Vorrichtung nach Anspruch 4
**dadurch gekennzeichnet, dass**
wenigstens ein Regelorgan (21) in Strömungsrichtung der Sichtungszone (24) vorgelagert angeordnet ist, welches den die Sichtungszone (24) durchquerenden Tertiärluftstrom (130) regelt.

6. Vorrichtung nach einem der Ansprüche 4 oder 5
**dadurch gekennzeichnet, dass**
die Sammeleinrichtung (30) aus wenigstens einem Flügel (30) besteht, welcher innerhalb der Sichtungszone (24) unterhalb des Brennstoffeinlasses (22) angeordnet ist um Brennstoff zu sammeln, welcher durch den Tertiärluftstrom (130) auf die nach oben weisende Seite des Flügels fällt.

7. Vorrichtung nach dem vorstehenden Anspruch
**dadurch gekennzeichnet, dass**
der wenigstens eine Flügel (30) die Sichtungszone (24) überspannt und eine Vorderkante aufweist, welche in Richtung der Tertiärluftleitung (130) zeigt.

8. Vorrichtung nach einem der Ansprüche 6 oder 7
**dadurch gekennzeichnet, dass**
die Neigung des wenigstens einen Flügels (30) festgelegt ist.

9. Vorrichtung nach einem der Ansprüche 6 bis 8
**dadurch gekennzeichnet, dass**
der wenigstens eine Flügel (30) wenigstens einen Kanal mit einer düsenartigen Öffnung in seiner nach oben weisenden Oberfläche aufweist.

10. Vorrichtung nach einem der Ansprüche 4 bis 9
**dadurch gekennzeichnet, dass**
der Sichter (20) wenigstens eine Düse (43) aufweist, mit welcher eine Druckwelle auf die Sichtungszone (24) und insbesondere auf die Sammeleinrichtung (30) gerichtet werden kann.

11. Vorrichtung nach Anspruch 10
**dadurch gekennzeichnet, dass**
die wenigstens eine Düse (43) über wenigstens eine Luftleitung mit wenigstens einer Druckgasquelle (41) verbunden ist.

## Revendications

1. Une méthode de calcination d'un minéral broyé non traité (150) dans un calcinateur (14) d'une ligne de fabrication de clinker de ciment, comprenant au moins les étapes de :
- apport d'au moins une partie d'un flux d'air tertiaire (130) à partir d'un refroidisseur de clinker (11) vers le calcinateur (14) via une zone de classification (24) d'un classificateur (20),
- apport de carburant (210) à la zone de classification (24), où une fraction de poids faible du carburant est transporté par le flux d'air tertiaire (130) à partir de la zone de classification (24) dans le calcinateur (14) et où une fraction de poids élevée passe dans le flux d'air tertiaire (130) et est récupérée dans la zone de classification (24),
- combustion de la fraction de poids faible dans le calcinateur (14), et
- réduction de la masse de pièces de la fraction de poids élevée dans la zone de classification (24) par sablage et/ou combustion et/ou pyrolyse jusqu'à ce que les pièces et/ou les parties soient transportées dans le calcinateur (14) par le flux d'air tertiaire (130).

2. La méthode de la revendication 1
**caractérisée par**
le contrôle de la vitesse de ladite partie du flux d'air tertiaire (130) passant au travers de ladite zone de classification (24).

3. La méthode de la revendication 2,
**caractérisée en ce que**
la vitesse de ladite partie du flux d'air tertiaire (130) est contrôlée par l'action d'un clapet (21) en amont de la zone de classification (24).

4. L'appareil pour produire de clinker de ciment, comprenant au moins un four (10), un calcinateur (14), un refroidisseur de clinker (11) et un conduit d'air tertiaire (13), où le conduit d'air tertiaire (13) connecte le refroidisseur de clinker (11) au calcinateur (14) pour fournir de l'air chauffé pour calciner un minéral broyé non traité (150) fourni au calcinateur (14), qui est ensuite traité dans le four (10) pour devenir clinker (100) et déchargé dans le refroidisseur de clinker (11),
**caractérisé en ce que**
l'appareil comprend un classificateur de carburant bas niveau (20) avec :
(i) une zone de classification (24) ayant une connexion avec le conduit d'air tertiaire (13) pour fournir au moins une partie d'un flux d'air tertiaire (130) à partir du refroidisseur de clinker (11) jusqu'à la zone de classification (24) et ayant une connexion avec le calcinateur (14), pour fournir ladite partie d'un flux d'air tertiaire (130) jusqu'au calcinateur (14),
(ii) une entrée de carburant (22) pour envoyer du carburant (210) dans le flux d'air tertiaire (130) passant dans la zone de classification (24),
(iii) au moins un collecteur (30) pour collecter des pièces d'une fraction de poids élevé du carburant (210) qui ne sont pas transportées par le flux d'air tertiaire (130) jusqu'au calcinateur (14), où au moins un collecteur (30) est positionné dans la zone de classification (24), pour exposer lesdites pièces de fraction de poids élevée au flux d'air tertiaire (130) pour la pyrolyse et/ou la combustion et/ou le sablage desdites pièces.

5. L'appareil de la revendication 4
**caractérisé en ce que**
au moins un clapet (21) est installé en amont de la zone de classification (24), pour contrôler le flux d'air tertiaire (130) passant dans la zone classification (24).

6. Un appareil de l'une des revendications 4 ou 5
**caractérisé en ce que**
le collecteur (30) comprend au moins une aile (30), étant positionnée dans la zone de classification (24) sous l'entrée de carburant (22) pour récupérer l'écoulement de carburant au travers du flux d'air tertiaire (130) sur le côté face en haut de l'aile.

7. L'appareil de la revendication précédente
**caractérisé en ce qu'**
au moins une aile (30) s'étend dans la zone de classification (24) et possède un bord frontal qui fait face à la connexion avec le conduit d'air tertiaire (130).

8. Un appareil de l'une des revendications 6 ou 7
**caractérisé en ce que**
le pas d'au moins une aile (30) est fixé.

9. Un appareil de l'une des revendications 6 à 8,
**caractérisé en ce qu'**
au moins une aile (30) possède au moins un conduit avec une ouverture en forme de buse sur sa surface face vers le haut.

10. Un appareil de l'une des revendications 4 à 9,
**caractérisé en ce qu'**
le classificateur (20) comprend au moins une buse (43) pour diriger une vague de compression vers la zone de classification (24) et en particulier vers le collecteur (30).

11. Un appareil de la revendication 10,
**caractérisé en ce qu'**
au moins une buse (43) est connectée au travers d'au moins un conduit d'air vers au moins une source de gaz comprimé (41).
